# EUROPÄISCHE PATENTANMELDUNG

(11) **EP 3 525 322 A1**
(43) Veröffentlichungstag der Anmeldung: **14.08.2019**
(21) Anmeldenummer: 18155729.9
(22) Anmeldetag: 08.02.2018
(51) Int. Cl.: H02K 3/12, H02K 3/28, H02K 3/34, H02K 3/50, H02K 15/02, H02K 15/06, H02K 15/00, H02K 3/14, H02K 15/04, H02K 17/16, H02K 1/24

(54) **STABWICKLUNG FÜR EINEN STATOR EINER ELEKTRISCHEN ROTIERENDEN MASCHINE**

(71) Anmelder: Siemens Aktiengesellschaft, 80333 München (DE)
(72) Erfinder: Sabelfeld, Ilja, 10119 Berlin (DE); Centner, Matthias, 10555 Berlin (DE); Festa, Marco, 14612 Falkensee (DE); Waschek, Jörg, 14612 Falkensee (DE)

(57) **Zusammenfassung**

Die Erfindung betrifft eine Stabwicklung (4) für einen Stator (10) einer elektrischen rotierenden Maschine (2). Um eine flexible Dimensionierung und eine kompakte Bauweise zu ermöglichen, wird vorgeschlagen, dass die Stabwicklung (4) als Zweischichtwicklung ausgebildet ist und eine Mehrzahl von Stabspulen (22) mit jeweils mehr als einer Windung aufweist, wobei die Stabspulen (22) jeweils mindestens einen Oberstab und einen Unterstab umfassen, wobei die Stäbe (30, 32) elektrisch voneinander isolierte Leiter aufweisen, welche den jeweiligen Windungen zugeordnet sind, wobei an einer Nicht-Schaltseite (N) die Leiter der jeweiligen Windungen an ihren axialen Enden elektrisch leitend verbunden sind und wobei die Leiter an einer Schaltseite (S) derartig an ihren axialen Enden verbunden sind, dass die Windungen in Serie geschaltet sind.

## Beschreibung

Die Erfindung betrifft eine Stabwicklung für einen Stator einer elektrischen rotierenden Maschine.

Darüber hinaus betrifft die Erfindung einen Stator für eine elektrische rotierende Maschine mit mindestens einer derartigen Stabwicklung.

Die Erfindung betrifft ferner eine elektrische rotierende Maschine mit mindestens einem Stator.

Des Weiteren betrifft die Erfindung ein Verfahren zur Herstellung eines Stators mit einer derartigen Stabwicklung.

Derartige Stabwicklungen werden insbesondere in elektrischen rotierenden Maschinen, insbesondere in Motoren und Generatoren, welche mit einer Leistung von mindestens einem Megawatt betreibbar sind, eingesetzt. Eine solche Stabwicklung umfasst eine Mehrzahl von Stabspulen, welche beispielsweise in Form einer Zweischichtwicklung in Nuten eines Statorblechpakets angeordnet sind, um, im Vergleich zu einer Einschichtwicklung, einen höheren Wicklungsfaktor, geringere Wicklungsverluste und einen geringeren Oberwellengehalt zu erreichen.

Die Offenlegungsschrift EP 3 176 924 A1 beschreibt ein Herstellungsverfahren für eine geschlossene Formspule eines Ständerwicklungssystems einer elektrischen rotierenden Maschine aus einer Rohspule. Die Formspule wird für eine Zweischichtwicklung verwendet. Ein Spulenquerschnitt weist mehrere Windungen mit zueinander isolierten Leitern auf, welche wiederum mehrere zueinander isolierte Teilleiter umfassen.

Die Offenlegungsschrift WO 2017/036687 A1 beschreibt einen Stator für eine elektrische Maschine mit einem Blechpaket, das Nuten aufweist, die sich in axialer Richtung des Stators erstrecken, und mit elektrisch leitfähigen, elektrische Wicklungen des Stators darstellenden Stäben, von denen jeweils mindestens einer in einer der Nuten angeordnet ist, wobei jeder Stab durch ein jeweiliges elektrisches Isolationselement elektrisch gegen das Blechpaket isoliert ist. Die Stäbe sind zu einer Zweischichtwicklung miteinander verschaltet.

Die Offenlegungsschrift WO 2013/189750 A2 beschreibt eine elektrische Maschine mit Nuten und Wicklungen von elektrischen Leitern, wobei die Wicklungen in Stränge unterteilt sind, wobei zumindest ein Strang jeweils eine Anzahl in Reihe geschalteter Spulen aufweist, die jeweils in den Nuten angeordnet sind, wobei die Spulen jeweils parallel geschaltete Teilleiter umfassen, wobei die Teilleiter einer Spule jeweils in mehreren Bündeln angeordnet sind.

Die Offenlegungsschrift WO 2016/096343 A1 beschreibt einen Stator für eine elektrische Maschine, wobei der Stator mit einer elektrischen Leistung von zumindest 1 MW betreibbar ist, wobei der Stator ein hohlzylinderförmiges Statorjoch und zumindest eine offene Nut aufweist, welche jeweils an der radialen Innenseite des Statorjoches angeordnet ist und welche jeweils in axialer Richtung verläuft. Es wird zumindest eine Toroidspule vorgeschlagen, welche jeweils das Statorjoch umschließt.

Der Erfindung liegt die Aufgabe zugrunde, eine Stabwicklung für einen Stator einer elektrischen rotierenden Maschine anzugeben, welche eine flexible Dimensionierung und eine kompakte Bauweise ermöglicht.

Diese Aufgabe wird erfindungsgemäß durch eine Stabwicklung für einen Stator einer elektrischen rotierenden Maschine, welche als Zweischichtwicklung ausgebildet ist und eine Mehrzahl von Stabspulen mit jeweils mehr als einer Windung aufweist, gelöst, wobei die Stabspulen jeweils mindestens einen Oberstab und einen Unterstab umfassen, wobei die Stäbe elektrisch voneinander isolierte Leiter aufweisen, welche den jeweiligen Windungen zugeordnet sind, wobei an einer Nicht-Schaltseite die Leiter der jeweiligen Windungen an ihren axialen Enden elektrisch leitend verbunden sind und wobei die Leiter an einer Schaltseite derartig an ihren axialen Enden verbunden sind, dass die Windungen in Serie geschaltet sind.

Ferner wird die Aufgabe erfindungsgemäß durch einen Stator, eine elektrische rotierende Maschine und ein Herstellungsverfahren mit den in den Ansprüchen 13 bis 15 angegebenen Merkmalen gelöst.

Die in Bezug auf die Stabwicklung nachstehend angeführten Vorteile und bevorzugten Ausgestaltungen lassen sich sinngemäß auf den Stator, die elektrische rotierende Maschine und das Herstellungsverfahren übertragen.

Der Erfindung liegt die Überlegung zugrunde, durch eine Erhöhung einer Anzahl von Windungen pro Stabspule in einer als Zweischichtwicklung ausgebildeten Stabwicklung für einen Stator einer elektrischen rotierenden Maschine die Abmessungen der Maschine zu verringern und mehr Freiheitsgrade bei der Dimensionierung zu ermöglichen. Eine Stabspule in einer Zweischichtwicklung weist jeweils einen Oberstab und einen Unterstab auf, welche in unterschiedlichen Nuten eines Blechpakets des Stators angeordnet sind. Die Stäbe weisen jeweils eine der Anzahl von Windungen entsprechende Anzahl an Leitern auf, wobei jeder Windung ein Leiter zugeordnet ist. An der Nicht-Schaltseite werden die Leiter der jeweiligen Windungen an ihren axialen Enden elektrisch leitend miteinander verbunden. An der Schaltseite werden die Windungen so verbunden, dass die Windungen in Serie geschaltet sind. Beispielsweise werden an der Schaltseite benachbarte Windungen miteinander verbunden. Alternativ erfolgt die Verbindung der einzelnen Windungen in einer anderen Reihenfolge. Unterscheidet sich eine Anzahl der Leiter eines Oberstabs von der eines Unterstabs um einen Leiter, ist eine Windungszahl, die einem geradzahligen Vielfachen von 0,5 entspricht, wie beispielsweise eine Windungszahl von 1,5 Windungen, 2,5 Windungen oder mehr, realisierbar.

Durch die Möglichkeit, die Windungszahl zu variieren, ist das Blechpaket des Stators der elektrischen rotierenden Maschine deutlich flexibler dimensionierbar als mit nur einer Windung. Ferner verkürzt sich der benötigte Bauraum des Stators und damit der elektrischen rotierenden Maschine durch eine größere Windungszahl.

In einer bevorzugten Ausgestaltung sind die Leiter der Windungen über Verbindungselemente unlösbar verbunden. Insbesondere sind die Verbindungselemente orthogonal zu den Enden der Stäbe angeordnet. Durch die unlösbar feste Verbindung sind die Stabspulen auch bei sehr hoher Beanspruchung stabil. Durch die Verbindungselemente sind die einzelnen Windungen flexibel miteinander verbindbar.

Bei einer weiteren vorteilhaften Ausgestaltung ist die Verbindung über Schweißen und/oder Löten hergestellt. Verschweißte und/oder verlötete Verbindungen sind elektrisch sehr gut leitfähig und mechanisch stabil.

Besonders vorteilhaft sind die Leiter im Bereich der Verbindungselemente im Wesentlichen parallel verlaufend angeordnet. Durch einen parallelen Verlauf der Leiter im Bereich der Verbindungselemente sind, insbesondere hinsichtlich des Überkoppelns, optimierte Abstände zwischen den Leitern wählbar, sodass der Platzbedarf der Wickelköpfe, insbesondere in Axialrichtung, verringert wird.

In einer bevorzugten Ausgestaltung umfassen die Leiter jeweils voneinander elektrisch isolierte Teilleiter. Bei einer Wechselstromspeisung findet aufgrund eines Nutenquerfeldes, welches entlang einer Statornuthöhe ungleich verteilt ist, eine Stromverdrängung in den Stabspulen der Stabwicklung statt. Durch die Stromverdrängung wird der elektrische Widerstand in den Stabspulen erhöht und der Wirkungsgrad der Stabwicklung wird durch die entstehenden ohmschen Verluste reduziert. Ein Aufteilen der Leiter in Teilleiter verringert, beispielsweise durch eine derartige Stromverdrängung verursachte, Verluste in der Stabwicklung. Die einzelnen Teilleiter sind außerdem einfacher, genauer und kostengünstiger formbar.

Bei einer weiteren vorteilhaften Ausgestaltung weisen die Teilleiter einen rechteckigen oder quadratischen Leiterquerschnitt auf. Insbesondere sind die Kanten der Teilleiter fertigungsbedingt abgerundet. Durch einen derartigen Leiterquerschnitt wird ein optimierter Füllfaktor, insbesondere in der Nut, erreicht.

Bei einer bevorzugten Ausgestaltung weist jeder der Stäbe mindestens einen Nutabschnitt auf, wobei die voneinander elektrisch isolierten Teilleiter zumindest in einem Nutabschnitt, insbesondere nach Art eines Roebelstabes, verdrillt sind. Beispielsweise sind jeweils die Teilleiter eines Leiters oder alle Teilleiter eines Stabes miteinander, insbesondere kontinuierlich, verdrillt. Durch das Verdrillen sind die einzelnen Teilleiter in Summe über die axiale Länge des Statorblechpakets gleichen magnetischen Randbedingungen ausgesetzt, sodass der Strom in den einzelnen Teilleitern vergleichmäßigt wird. Daher werden Verluste durch Verdrillen der Spulenstäbe reduziert.

In einer weiteren vorteilhaften Ausgestaltung weist jeder der Stäbe mindestens einen Wickelkopfabschnitt auf, wobei die Teilleiter der jeweiligen Leiter von zumindest einem Teil des Wickelkopfabschnitts ebenfalls, insbesondere nach Art eines Roebelstabes, verdrillt sind. Durch das Verdrillen auch außerhalb des Nutabschnitts ist eine an den axialen Enden der Stäbe verbindbare Anordnung der Leiter und/oder der Teilleiter zueinander widerherstellbar, ohne die, insbesondere kontinuierlich verdrillte, Anordnung der Leiter im Nutabschnitt zu ändern.

Bei einer weiteren vorteilhaften Ausführungsform weist jeder der Stäbe mindestens einen Wickelkopfabschnitt auf, wobei die voneinander elektrisch isolierten Teilleiter der jeweiligen Leiter in zumindest einem Teil des Wickelkopfabschnitts kurzgeschlossen sind. Insbesondere sind die Teilleiter durch eine elektrisch leitfähige Verbindung, welche beispielsweise durch Löten und/oder Schweißen hergestellt wird, kurzgeschlossen. Durch einen derartigen Kurzschluss der Teilleiter reduziert sich die Anzahl der Verbindungsstellen zwischen den Stäben erheblich, ohne die elektrischen Eigenschaften der Wicklung merklich zu beeinflussen.

Besonders vorteilhaft weist mindestens eine Stabspule eine erste Windungszahl auf, wobei mindestens eine weitere Stabspule eine zweite Windungszahl aufweist, welche von der ersten Windungszahl verschieden ist. Durch die Verwendung von unterschiedlichen Windungszahlen liegen beispielsweise zwei Spulennutseiten unterschiedlicher Windungszahl innerhalb einer Nut. Aus der Reihenschaltung dieser Spulen unterschiedlicher Windungszahl ergeben sich feinere Abstufungsmöglichkeiten der spannungshaltenden Windungszahl, als es aus der Reihenschaltung von Spulen gleicher Windungszahl möglich wäre. Da, insbesondere bei sehr niedrigen Windungszahlen, Windungszahlsprünge große Veränderungen des magnetischen Flusses bedeuten und zu hohe oder zu niedrige magnetische Sättigungen zu hohen Verlusten führen, führt die Verwendung von Formspulen mit unterschiedlichen Windungszahlen zu geringeren Verlusten im Stator.

Besonders vorteilhaft sind Stabspulen mit der ersten Windungszahl und weitere Stabspulen mit der zweiten Windungszahl in Umfangsrichtung alternierend angeordnet. Eine derartige Anordnung führt zu einer symmetrischen Feldverteilung.

In einer bevorzugten Ausführungsform ist ein Verhältnis der Windungszahlen zueinander nicht ganzzahlig und/oder ein Betrag einer Differenz der Windungszahlen gleich 1. Beispielsweise ist das Verhältnis der Windungszahlen zueinander 3:2, 4:3 oder 5:4. Durch ein derartiges Verhältnis der Windungszahlen ist vorteilhaft eine optimal feine Abstufung der spannungshaltenden Windungszahl realisierbar.

Im Folgenden wird die Erfindung anhand der in den Figuren dargestellten Ausführungsbeispiele näher beschrieben und erläutert.

Es zeigen:
- FIG 1: einen Längsschnitt einer elektrischen rotierenden Maschine mit einer Stabwicklung,
- FIG 2: einen perspektivisch dargestellten Ausschnitt einer Stabspule für eine Stabwicklung im Bereich der Nicht-Schaltseite,
- FIG 3: einen vergrößert dargestellten Ausschnitt eines axialen Endes einer Stabspule für eine Stabwicklung im Bereich der Nicht-Schaltseite,
- FIG 4: eine vergrößerte Darstellung einer Serienschaltung von Stabspulen im Bereich der Schaltseite.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Gleiche Bezugszeichen haben in den verschiedenen Figuren die gleiche Bedeutung.

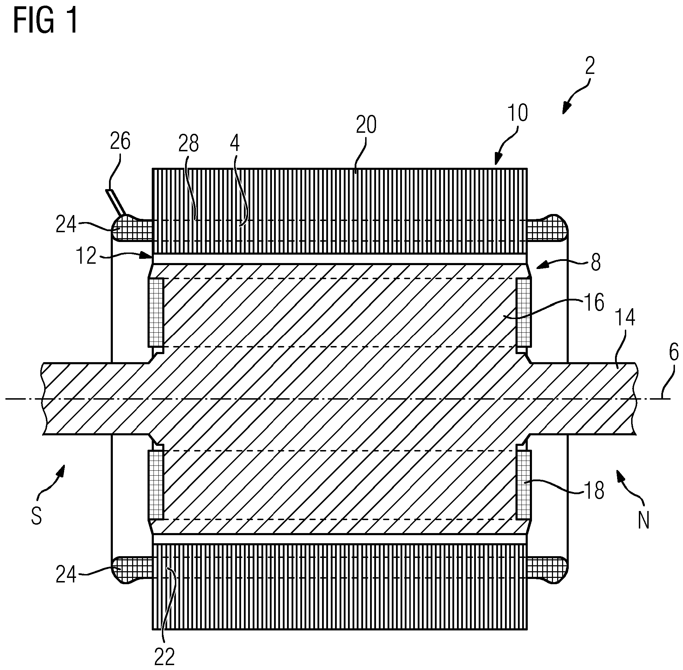

FIG 1 zeigt einen Längsschnitt einer elektrischen rotierenden Maschine 2 mit einer Stabwicklung 4. Die elektrische rotierende Maschine 2 ist beispielhaft als Synchronmaschine ausgeführt und umfasst einen um eine Rotationsachse 6 rotierbaren Rotor 8, der exemplarisch als Schenkelpolläufer ausgeführt ist, und einen den Rotor 8 umgebenden Stator 10, wobei sich zwischen dem Rotor 8 und dem Stator 10 ein Spalt 12, der insbesondere als Luftspalt ausgeführt ist, befindet. Die Rotationsachse 6 definiert eine Axialrichtung und eine Radialrichtung. Der Rotor 8 umfasst eine Welle 14 und Schenkelpole 16 mit einer Erregerwicklung 18. Alternativ weist der Rotor 8 ein Rotorblechpaket mit Permanentmagneten oder einem Kurzschlusskäfig auf.

Der Stator 10 umfasst ein Statorblechpaket 20, in welchem die Stabwicklung 4 angeordnet ist, wobei die Stabwicklung 4 eine Mehrzahl von Stabspulen 22 umfasst, welche an den axialen Enden des Statorblechpakets 20 Wickelköpfe 24 ausbilden. Die Stabwicklung 4 weist eine Schaltseite S und eine Nicht-Schaltseite N auf, wobei sich elektrische Kontakte 26 an Wickelköpfen 24 der Stabspulen 22 auf der Schaltseite 11 befinden. Die Stabspulen 22 der Stabwicklung 4 weisen jeweils mehr als eine Windung auf und sind in Nuten 28 angeordnet, welche in Axialrichtung durch das Statorblechpaket 20 verlaufen.

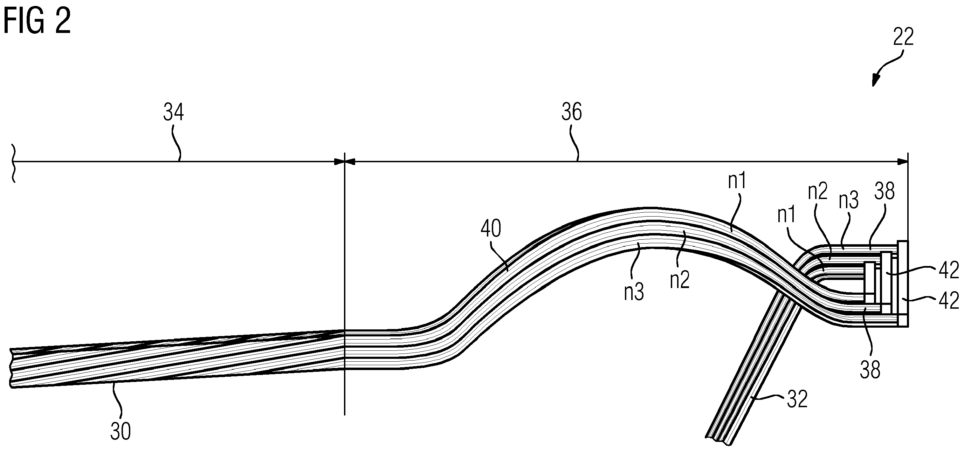

FIG 2 zeigt einen perspektivisch dargestellten Ausschnitt einer Stabspule 22 für eine Stabwicklung 4 im Bereich der Nicht-Schaltseite N, wobei die Stabwicklung 4 als Zweischichtwicklung ausgeführt ist und exemplarisch drei Windungen n1, n2, n3 aufweist. Daher weist die Stabspule 22 einen Oberstab 30 und einen Unterstab 32 auf, die, wie in FIG 1 zu sehen, in Nuten 28 des Statorblechpakets 20 angeordnet sind. Das Statorblechpaket 20 mit den Nuten 28 sowie Isolierungen sind aus Gründen der Übersichtlichkeit in FIG 2 nicht dargestellt. Die Bereiche der Stäbe 30, 32, die sich innerhalb der Nuten 28 des Statorblechpakets 20 befinden, werden Nutabschnitte 34 genannt. Die Teile der Stäbe 30, 32, die sich außerhalb des Statorblechpakets 20 befinden, werden Wickelkopfabschnitte 36 genannt. Die Stäbe 30, 32 weisen elektrisch voneinander isolierte Leiter 38 auf, welche den jeweiligen Windungen n1, n2, n3 zugeordnet sind. Die Leiter 38 der Stabspule 22 umfassen jeweils einzelne Teilleiter 40, welche aus Kupfer hergestellt sind und einen rechteckigen oder quadratischen Leiterquerschnitt aufweisen. Die Teilleiter 40 sind im Bereich des Nutabschnitts 34 voneinander elektrisch isoliert angeordnet und, insbesondere nach Art eines Roebelstabes, verdrillt. Dabei sind die Teilleiter 40 des jeweiligen Stabes 30, 32 miteinander verdrillt. Zusätzlich oder alternativ sind die Teilleiter 40 der jeweiligen Leiter 38 miteinander verdrillt. Im Bereich des Wickelkopfabschnitts 36 sind die Teilleiter 40 der jeweiligen Leiter 38 am axialen Stabende kurzgeschlossen, wobei die Stäbe 30, 32 windungsweise über ihre Leiter 38 verbunden werden, sodass eine Anzahl von Verbindungsstellen zwischen den Leitern signifikant reduziert wird.

Die Stäbe 30, 32 sind an ihren axialen Enden mittels Verbindungselementen 42 unlösbar miteinander verbunden, wobei die Leiter 38 der Windungen n1, n2, n3 über jeweils ein Verbindungselement 42 verbunden sind, sodass die Windungen n1, n2, n3 der Stabspule 22 in Serie geschaltet sind. Mit Hilfe eines derartigen Aufbaus lassen sich auch Windungszahlen, die einem geradzahligen Vielfachen von 0,5 entspricht, wie beispielsweise eine Windungszahl von 1,5 Windungen, 2,5 Windungen oder mehr, realisieren. Die Verbindungselemente 42 sind als massive gerade Kupferprofile mit einem rechteckigen oder quadratischen Querschnitt ausgeführt und im Wesentlichen parallel zueinander verlaufend angeordnet, wobei die Leiter 38 der Stäbe 30, 32 im Bereich der Verbindungselemente 42 im Wesentlichen senkrecht zu den geraden Kupferprofilen angeordnet sind. Um eine möglichst stabile und verlustarme Verbindung sicherzustellen, werden die Verbindungselemente 42 mit den Leitern 38 stoffschlüssig verbunden. Eine derartige stoffschlüssige Verbindung wird mittels Schweißen und/oder Löten hergestellt. Die weitere Ausführung der Stabspule 22 in FIG 2 entspricht der Ausführung in FIG 1.

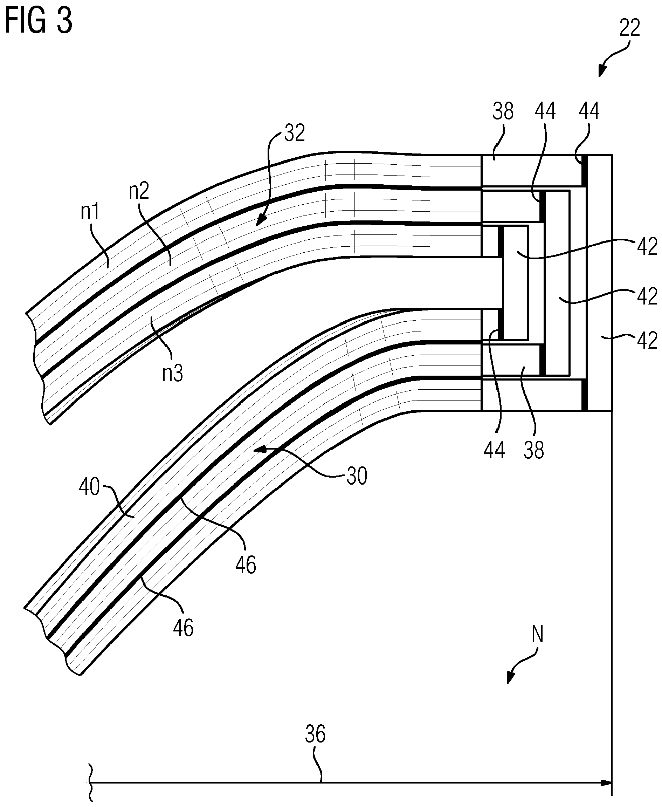

FIG 3 zeigt einen vergrößert dargestellten Ausschnitt eines axialen Endes einer Stabspule 22 für eine Stabwicklung 4 im Bereich der Nicht-Schaltseite N, welche, wie in FIG 2, exemplarisch drei Windungen n1, n2, n3 aufweist. Die Leiter 38 der Windungen n1, n2, n3 sind jeweils über ein Verbindungselement 42 verbunden, welches über eine stoffschlüssige Verbindung 44, insbesondere eine Schweißverbindung und/oder eine Lötverbindung, unlösbar mit den jeweiligen Leitern 38 verbunden ist. Die Leiter weisen jeweils mehrere Teilleiter 40 auf, welche im Bereich der Verbindung mit dem Verbindungselement 42 zu einem massiven Gesamtleiter verbunden sind. Alternativ werden die Teilleiter 40 der jeweiligen Leiter 38 an ihren axialen Enden mit einem massiven Leiter verbunden, welcher mit dem Verbindungselement 42 verbunden wird. Im Bereich des Wickelkopfabschnitts 36 verlaufen die Teilleiter 40 parallel zueinander und sind nicht verdrillt, während die Teilleiter 40, wie in FIG 2 zu sehen, im Nutabschnitt 34, insbesondere nach Art eines Roebelstabes, verdrillt angeordnet sind. Die Leiter 38 der Stäbe 30, 32, welche den jeweiligen Windungen n1, n2, n3 zugeordnet sind, sind über eine Isolierung 46 voneinander elektrisch isoliert. Die weitere Ausführung der Stabspule 22 in FIG 3 entspricht der Ausführung in FIG 2.

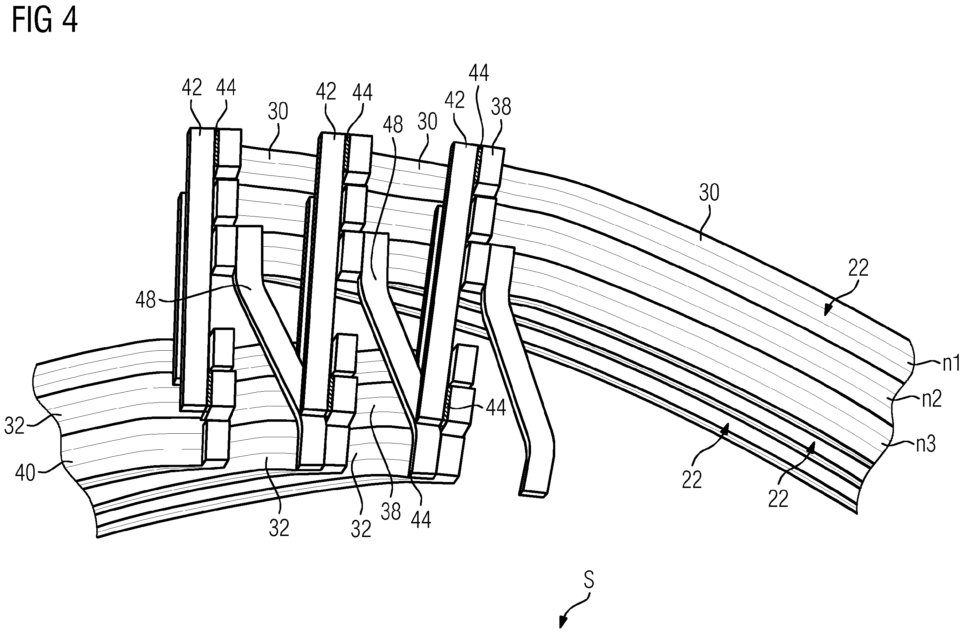

FIG 4 zeigt eine vergrößerte Darstellung einer Serienschaltung von Stabspulen 22 im Bereich der Schaltseite S. Es sind exemplarisch drei Stabspulen 22 dargestellt, welche jeweils drei in Serie geschaltete Windungen n1, n2, n3 aufweisen. Die Leiter 38 der jeweiligen Stabspulen 22 sind an der in FIG 4 dargestellten Schaltseite S derartig an ihren axialen Enden verbunden, dass die jeweiligen drei Windungen n1, n2, n3 in Serie geschaltet sind. Exemplarisch sind jeweils die benachbarten Windungen n1, n2, n3 über eine stoffschlüssige Verbindung miteinander elektrisch leitend verbunden, sodass die erste Windung n1 mit der zweiten Windung n2 und die zweite Windung n2 mit der dritten Windung n3 in Serie geschaltet ist.

Die exemplarisch drei Stabspulen 22 werden in benachbarten Nuten 28 des Statorblechpakets 20, welches aus Gründen der Übersichtlichkeit nicht dargestellt ist, in einer Zweischichtwicklung angeordnet. Die weitere Ausführung der einzelnen Stabspulen 22 in FIG 4 entspricht der Ausführung in FIG 2. Eine Serienschaltung der Stabspulen 22 wird mittels massiver Verbindungsleiter 48 hergestellt, welche aus Kupfer hergestellt sind und einen rechteckigen oder quadratischen Querschnitt aufweisen. Die Serienschaltung wird über die Verbindungsleiter 48 durch eine elektrisch leitfähige Verbindung der dritten Windung n3 einer Stabspule 22 zur ersten Windung der folgenden benachbarten Stabspule 22 hergestellt. Weitere Möglichkeiten der Reihenfolge einer Serienschaltung der Stabspulen 22 sind ebenfalls möglich und Gegenstand der Erfindung. Die Verbindungsleiter 48 weisen eine Isolierung auf, welche aus Gründen der Übersichtlichkeit nicht dargestellt ist.

Zusammenfassend betrifft die Erfindung eine Stabwicklung 4 für einen Stator 10 einer elektrischen rotierenden Maschine 2. Um eine flexible Dimensionierung und eine kompakte Bauweise zu ermöglichen, wird vorgeschlagen, dass die Stabwicklung als Zweischichtwicklung ausgebildet ist und eine Mehrzahl von Stabspulen 22 mit jeweils mehr als einer Windung n1, n2, n3 aufweist, wobei die Stabspulen 22 jeweils mindestens einen Oberstab 30 und einen Unterstab 32 umfassen, wobei die Stäbe 30, 32 elektrisch voneinander isolierte Leiter 38 aufweisen, welche den jeweiligen Windungen n1, n2, n3 zugeordnet sind, wobei an einer Nicht-Schaltseite N die Leiter 38 der jeweiligen Windungen n1, n2, n3 an ihren axialen Enden elektrisch leitend verbunden sind und wobei die Leiter 38 an einer Schaltseite S derartig an ihren axialen Enden verbunden sind, dass die Windungen n1, n2, n3 in Serie geschaltet sind.

## Patentansprüche

1. Stabwicklung (4) für einen Stator (10) einer elektrischen rotierenden Maschine (2),
welche als Zweischichtwicklung ausgebildet ist und eine Mehrzahl von Stabspulen (22) mit jeweils mehr als einer Windung (n1, n2, n3) aufweist,
wobei die Stabspulen (22) jeweils mindestens einen Oberstab (30) und einen Unterstab (32) umfassen,
wobei die Stäbe (30, 32) elektrisch voneinander isolierte Leiter (38) aufweisen, welche den jeweiligen Windungen (n1, n2, n3) zugeordnet sind,
wobei an einer Nicht-Schaltseite (N) die Leiter (38) der jeweiligen Windungen (n1, n2, n3) an ihren axialen Enden elektrisch leitend verbunden sind und
wobei die Leiter (38) an einer Schaltseite (S) derartig an ihren axialen Enden verbunden sind, dass die Windungen (n1, n2, n3) in Serien geschaltet sind.

2. Stabwicklung (4) nach Anspruch 1,
wobei die Leiter (38) der Windungen (n1, n2, n3) über Verbindungselemente (42) unlösbar verbunden sind.

3. Stabwicklung (4) nach einem der Ansprüche 1 oder 2,
wobei die Verbindung über Schweißen und/oder Löten hergestellt ist.

4. Stabwicklung (4) nach einem der Ansprüche 2 oder 3,
wobei die Leiter (38) im Bereich der Verbindungselemente (42) im Wesentlichen parallel verlaufend angeordnet sind.

5. Stabwicklung (4) nach einem der vorherigen Ansprüche,
wobei die Leiter (38) jeweils voneinander elektrisch isolierte Teilleiter (40) umfassen.

6. Stabwicklung (4) nach Anspruch 5,
wobei die Teilleiter (40) einen rechteckigen oder quadratischen Leiterquerschnitt aufweisen.

7. Stabwicklung (4) nach einem der Ansprüche 5 oder 6,
wobei jeder der Stäbe (30, 32) mindestens einen Nutabschnitt (34) aufweist,
wobei die voneinander elektrisch isolierten Teilleiter (40) zumindest in einem Nutabschnitt (34), insbesondere nach Art eines Roebelstabes, verdrillt sind.

8. Stabwicklung (4) nach Anspruch 7,
wobei jeder der Stäbe (30, 32) mindestens einen Wickelkopfabschnitt (36) aufweist,
wobei die Teilleiter (40) der jeweiligen Leiter (38) von zumindest einem Teil des Wickelkopfabschnitts (36) ebenfalls, insbesondere nach Art eines Roebelstabes, verdrillt sind.

9. Stabwicklung (4) nach einem der Ansprüche 5 bis 8,
wobei jeder der Stäbe (30, 32) mindestens einen Wickelkopfabschnitt (36) aufweist,
wobei die voneinander elektrisch isolierten Teilleiter (40) der jeweiligen Leiter (38) in zumindest einem Teil des Wickelkopfabschnitts (36) kurzgeschlossen sind.

10. Stabwicklung (4) nach einem der vorherigen Ansprüche, wobei mindestens eine Stabspule (22) eine erste Windungszahl (w1) aufweist,
wobei mindestens eine weitere Stabspule (22) eine zweite Windungszahl (w2) aufweist, welche von der ersten Windungszahl (w1) verschieden ist.

11. Stabwicklung (4) nach Anspruch 10,
wobei Stabspulen (22) mit der ersten Windungszahl (w1) und weitere Stabspulen (22) mit der zweiten Windungszahl (w2) in Umfangsrichtung alternierend angeordnet sind.

12. Stabwicklung (4) nach einem der Ansprüche 10 oder 11,
wobei ein Verhältnis der Windungszahlen (w1, w2) zueinander nicht ganzzahlig ist und/oder ein Betrag einer Differenz der Windungszahlen (w1, w2) gleich 1 ist.

13. Stator (10) für eine elektrische rotierende Maschine (2) mit mindestens einer Stabwicklung (4) nach einem der Ansprüche 1 bis 12.

14. Elektrische rotierende Maschine (2) mit mindestens einem Stator (10) nach Anspruch 13.

15. Verfahren zur Herstellung eines Stators (10) mit einer Stabwicklung (4) nach einem der Ansprüche 1 bis 12.

16. Verfahren nach Anspruch 15,
wobei die Stäbe (30, 32) in Nuten (28) eingelegt und in einem darauf folgenden Schritt zu einer geschlossenen Stabspule (22) verbunden werden.

17. Verfahren nach Anspruch 16,
wobei zunächst die Unterstäbe (32) und daraufhin die Oberstäbe (30) in die Nuten (28) eingelegt werden.

18. Verfahren nach einem der Ansprüche 16 oder 17,
wobei daraufhin zumindest zwei, insbesondere in benachbarten Nuten (28) angeordnete, Stabspulen (22) in einer Serienschaltung miteinander verbunden werden.
